(19) Europäisches Patentamt

European Patent Office

Office européen des brevets

(11) Veröffentlichungsnummer: **0 351 916 B1**

(12) **EUROPÄISCHE PATENTSCHRIFT**

(45) Veröffentlichungstag der Patentschrift: **01.06.94**

(21) Anmeldenummer: **89201870.6**

(22) Anmeldetag: **17.07.89**

(51) Int. Cl.⁵: **H04B 1/16,** H04H 5/00

(54) **Stereo-Empfangsschaltung.**

(30) Priorität: **22.07.88 DE 3824890**

(43) Veröffentlichungstag der Anmeldung:
**24.01.90 Patentblatt 90/04**

(45) Bekanntmachung des Hinweises auf die
Patenterteilung:
**01.06.94 Patentblatt 94/22**

(84) Benannte Vertragsstaaten:
**DE FR GB IT**

(56) Entgegenhaltungen:
**EP-A- 0 103 917**
**DE-B- 2 753 199**
**US-A- 3 700 921**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Horl, Manfred
Fehnweg 39
D-2000 Hamburg 62(DE)**

(74) Vertreter: **Hartmann, Heinrich, Dipl.-Ing. et al
Philips Patentverwaltung GmbH,
Wendenstrasse 35c
D-20097 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Stereo-Empfangsschaltung zum Verarbeiten eines ein Pilotsignal enthaltenden Multiplex-Signals mit einem Pilotsignaldetektor, der im Multiplex-Signal enthaltende Frequenzkomponenten mit der Frequenz des Pilotsignals detektiert und einen Schmitt-Trigger zum Beeinflussen des Mono/Stereobetriebes steuert, sowie mit einer die Rausch-Komponenten im Multiplex-Signal erfassenden, auf den Schmitt-Trigger einwirkenden Steuerschaltung.

Eine solche Schaltung, die im wesentlichen aus der DE-AS 27 53 199 bekannt ist, kann einerseits in einem Rundfunkempfänger für UKW-Stereo, andererseits aber auch in einem Fernsehempfänger verwendet werden, der stereophone Audiosignale, beispielsweise entsprechend der US-Norm, empfangen kann.

Bei kleinen Empfangsfeldstärken ist das Ausgangssignal des Pilotsignaldetektors wegen des dem Multiplexsignal überlagerten Rauschens Schwankungen ausgesetzt, die zu einem ständigen Hin- und Herschalten zwischen Mono- und Stereobetrieb führen und zu einem Flackern einer mit dem Ausgang des Schmitt-Triggers gekoppelten Stereoanzeige führen können. Zur Vermeidung dieser störend empfundenen Effekte ist bei dem bekannten Stereoempfänger eine Steuerschaltung vorgesehen, die die Rauschkomponente im Multiplex-Signal erfaßt und Schwellwert und Hysterese des Schmitt-Triggers entsprechend steuert. Als Schmitt-Trigger wird dabei und im folgenden ein Schaltverstärker mit Hysterese bezeichnet, d.h. eine Schaltung, die in Abhängigkeit vom Eingangssignal zweier Schaltzustände fähig ist, wobei der Übergang vom einen in den anderen Zustand bei einem anderen Pegel des Eingangssignals erfolgt als der entgegengesetzte Übergang. Bei der bekannten Schaltung umfaßt der Pilotsignaldetektor einen auf die Frequenz des Pilotsignals abgestimmten Bandpaß, dem ein Gleichrichter nachgeschaltet ist. Die Spannung am Gleichrichterausgang schwankt bei geringen Feldstärken verhältnismäßig wenig, so daß das ständige Hin- und Herschalten des Schmitt-Triggers durch eine Nachführung der Schaltschwelle und der Hysterese weitgehend unterdrückt werden kann.

Bei einem Pilotsignaldetektor, bei dem das Ausgangssignal wesentlich stärker schwankt als bei dem bekannten Pilotsignaldetektor, ist das bekann-te Schaltungsprinzip nicht anwendbar. Pilotsignal-detektoren beispielsweise, die mit einer PLL-Schaltung zusammenwirken, können Ausgangssignale liefern, die sowohl deutlich über als auch deutlich unter dem Ausgangspegel liegen können, der sich bei einwandfreiem Stereoempfang ergibt.

Es ist Aufgabe der Erfindung, eine Schaltung der eingangs genannten Art so auszugestalten, daß auch bei einem stark schwankenden Ausgangssignal des Pilotsignaldetektors das Hin- und Herschalten des Schmitt-Triggers weitgehend unterbunden wird.

Diese Aufgabe wird erfindungsgemäß dadurch gelöst, daß die Steuerschaltung nur im Monobetrieb wirksam ist und beim Empfang von ausrei-chend starken Rauschkomponenten das Eingangs-signal des Schmitt-Triggers so beeinflußt, daß dieser in seinem mit dem Monobetrieb verbundenen Schaltzustand bleibt.

Bei der Erfindung ist die Steuerschaltung nur im Monobetrieb wirksam. Bei starken Sendern im Monobetrieb sind die Rauschkomponenten im Multiplex-Signal so schwach, daß die Steuerschaltung das Eingangssignal des Schmitt-Triggers nicht beeinflussen kann. Bei abnehmendem Pegel des Monosenders werden die Rauschkomponenten zwar größer - auch die im Frequenzbereich des Pilotsignals - jedoch beeinflußt die Steuerschaltung das Eingangssignal des Schmitt-Triggers dann so, daß dieser im Monobetrieb bleibt. - Beim Empfang eines starken Stereosenders ist die Steuerschaltung unwirksam und der Ausgangspegel des Pilotsignaldetektors genügend groß, um den Schmitt-Trigger in den Schaltzustand für Stereobetrieb umzuschalten. Nimmt der Pegel dieses Senders ab, dann nehmen infolge des Rauschens die Schwankungen des Ausgangssignals des Pilottondetektors zu, bis ein Mindestwert unterschritten wird, und der Schmitt-Trigger in den Schaltzustand für den Monobetrieb gelangt. Dieser Schaltzustand macht die Steuerschaltung wirksam und die dann genügend starken Rauschkomponenten bewirken, daß die Steuerschaltung den Schmitt-Trigger im Schaltzustand für den Monobetrieb hält.

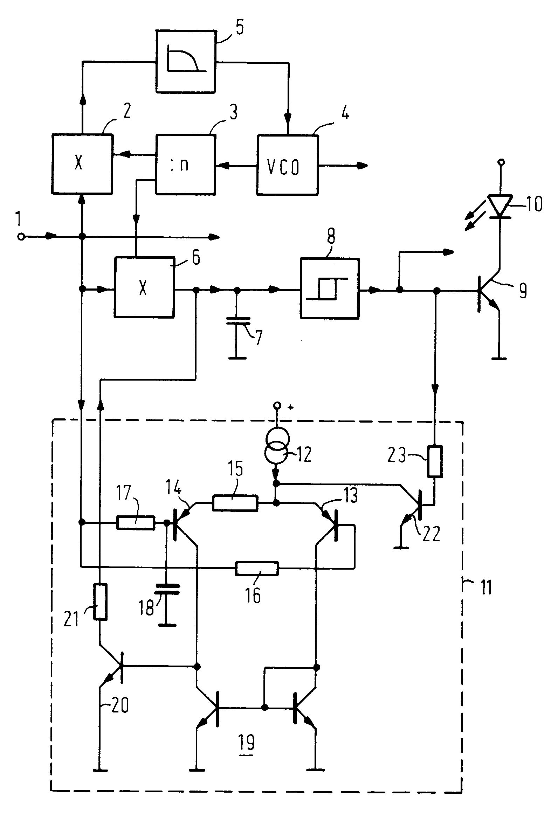

Die Erfindung wird nachstehend anhand der Zeichnung näher erläutert, die das Blockschaltbild eines Teils des Stereodekoders eines Stereoempfängers zeigt.

An einer Eingangsklemme 1, die sich in einem Signalweg befindet, in dem der Eingangsklemme eine Hochfrequenzeingangsschaltung, eine Zwischenfrequenzstufe und ein FM-Demodulator (alle Komponenten nicht dargestellt) vorausgehen, liegt im Stereobetrieb ein Multiplex-Signal und im Monobetrieb ein Audiosignal an, sowie gegebenenfalls damit einhergehende Rauschkomponenten. Dieses Signal wird verschiedenen Stufen des Stereodekoders zugeführt.

In einer Phasenvergleichsschaltung 2, die ein dem Produkt ihrer Eingangssignale proportionales Ausgangssignal liefert, wird das Signal am Eingang 1 mit einem Signal von einem spannungsgesteuerten Oszillator 4 verglichen. Der Oszillator 4 schwingt auf dem n-fachen der Pilotsignalfrequenz, vorzugsweise auf dem Vierfachen; deshalb wird das Ausgangssignal einem weiteren Eingang der Phasenvergleichsschaltung über einen Frequenzteiler 3 zugeführt, der dieses Signal um den Faktor n in der Frequenz teilt. Das Ausgleichsignal des Phasenvergleichers wird über einen Tiefpaß 5 dem spannungsgesteuerten Oszillator 4 zugeführt. Wenn in dem Signal am Eingang 1 ein Pilotsignal enthalten ist, wird die so gebildete PLL-Schaltung (2..5) auf der Frequenz des Pilotsignals einrasten, wobei zwischen dem am Eingang des Phasenvergleichers 2 wirksamen Ausgangssignal des Frequenzteilers 3 und dem Pilotsignal eine Phasenverschiebung von 90° besteht.

Das Signal am Eingang 1 wird außerdem einem Eingang einer Multiplizierstufe 6 zugeführt, in der es mit einem Ausgangssignal des Frequenzteilers 3 multipliziert wird, das gegenüber dem Signal am anderen Ausgang des Frequenzteilers 3 um 90° in der Phase versetzt ist. Die Multiplizierschaltung 6 liefert an ihrem hochohmigen Ausgang eine Spannung, die dem Produkt der Eingangssignale proportional ist. Diese Spannung enthält also eine Komponente mit der doppelten Frequenz des Pilotsignals sowie eine Gleichstromkomponente. Die Gleichstromkomponente lädt einen an den Ausgang der Multiplizierschaltung 6 angeschlossenen Kondensator 7 auf, der zusammen mit der Multiplizierschaltung 6 einen Pilotsignaldetektor bildet und Komponenten mit der doppelten Pilotsignalfrequenz unterdrückt.

Am Kondensator 7 ergibt sich somit eine Gleichspannung, die einem Schmitt-Trigger 8 zugeführt wird. Dieser ist so ausgelegt, daß er bei Vorhandensein eines Pilotsignals mit ausreichendem Pegel von einem dem Monobetrieb zugeordneten Schaltzustand in einen Schaltzustand für den Stereobetrieb übergeht. Im Stereobetrieb schaltet der Schmitt-Trigger 8 einen Schalttransistor 9 ein, der eine optische Anzeige, beispielsweise in Form einer lichtemittierenden Diode 10 steuert, und der darüber hinaus einen nicht näher dargestellten Mono/Stereoumschalter umschaltet, so daß sich beim Empfang eines ausreichend starken Stereosenders ein Stereoempfang ergibt.

Insoweit, als bisher beschrieben, ist die Schaltung 1..10 bekannt (vergl. z.B. die integrierte Schaltung TDA 1578A von Valvo/Philips). Der PLL-Dekoder 2..5 kann beim Empfang von schwachen Monosendern auf Frequenzkomponenten des im Eingangssignal enthaltenen Rauschens einrasten, die in den Fangbereich der PLL-Schaltung fallen. Dabei kann der Pilotsignal-Detektor 6,7 relativ häufig ein Ausgangssignal liefern, das ausreicht, um den Schmitt-Trigger 8 kurzzeitig in den Stereoschaltzustand zu bringen. Ebenso kann beim Empfang eines schwachen Stereosenders der Oszillator auf im Rauschen enthaltenen Frequenzkomponenten einrasten, die ihn von der Frequenz des Pilotsignals wegziehen. Die dadurch entstehenden Phasenänderungen führen zu erheblichen Schwankungen in der Ausgangsspannung des Pilotdetektors 6, 7, so daß relativ häufig der Schmitt-Trigger kurzzeitig in den Mono-Schaltzustand übergeht. Die damit verbundene fortlaufende Änderung der Anzeige (lichtemittierende Diode 10) und des Empfangszustandes (Monoempfang oder Stereoempfang) stört den Benutzer sehr. Sie wird durch eine Steuerschaltung 11 praktisch unterbunden.

Diese Schaltung sorgt bei schwacher Empfangsfeldstärke dafür, daß die Spannung am Pilotdetektor abgesenkt wird und der Schmitt-Trigger im Schaltzustand für den Monobetrieb geschaltet wird bzw. geschaltet bleibt. Sie wird durch das Ausgangssignal des Schmitt-Triggers 8 so gesteuert, daß sie nur wirksam wird, wenn der Schmitt-Trigger 8 auf Monobetrieb steht, und wertet das im Signal an der Klemme 1 oberhalb des Nutzfrequenzbereichs enthaltene Rauschen aus.

Die Schaltung enthält eine Gleichstromquelle 12, deren Gleichstrom dem Emitter eines Transistors 13 direkt und dem Emitter eines Transistors 14 über einen Widerstand 15 zugeführt wird. Die Basen der Transistoren 13 und 14 sind über gleich große Widerstände 16 und 17 mit dem Eingang 1 verbunden, wobei ein an die Basis des Transistors 14 angeschlossener Kondensator 18 zusammen mit dem Widerstand 17 einen Tiefpaß bildet, der eine Zeitkonstante von rund 400 ns aufweist. Der Kollektor eines Transistors 13 ist mit dem Eingang und der Kollektor des Transistors 14 mit dem Ausgang eines Stromspiegels 19 verbunden. Der Ausgang des Stromspiegels ist darüber hinaus mit einem Transistorschalter 20 verbunden, der in Serie mit einem Begrenzungswiderstand 21 dem Kondensator 7 parallelgeschaltet ist. Der Anschluß der Gleichstromquelle 12 an den Differenzverstärker 13..15 ist mit der Kollektoremitterstrecke eines Schalttransistors 22 verbunden, dessen Basis über einen Begrenzungswiderstand 23 an den Ausgang des Schmitt-Triggers 8 angeschlossen ist.

Wenn sich der Schmitt-Trigger 8 in dem Schaltzustand für den Monobetrieb befindet, ist seine Ausgangsspannung - ebenso wie seine Eingangsspannung niedrig, so daß der Transistor 22 gesperrt ist und der Strom der Gleichstromquelle 12 ausschließlich über die Transistoren 13 und 14 fließt. Im Schaltzustand des Schmitt-Triggers für den Stereobetrieb hingegen ist seine Ausgangsspannung so groß, daß der Schalttransistor 22 leitend wird und der gesamte Strom der Gleichstromquelle 12 über diesen Transistor abgeleitet wird. In diesem Schaltzustand ist die Schaltung 11 unwirksam.

Im Monobetrieb liegen an der Basis des Transistors 14 die niedrigen Frequenzen, d.h. der gesamte Nutzfrequenzbereich des Multiplex-Signals. Diese Frequenzen erscheinen naturgemäß auch an der Basis des Transistors 13; zusätzlich ergeben sich aber auch höherfrequente Komponenten, die von dem oberhalb des Nutzfrequenzbereiches liegenden Rauschen herrühren. Solange die Empfangsverhältnisse gut sind, sind die Rauschkomponenten klein und an den Basen der Transistoren 13 und 14 liegt im wesentlichen das gleiche Signal. Wegen des Gleichspannungsabfalls am Widerstand 15 ist die Basis-Emitter-Spannung des Transistors 14 kleiner als die des Transistors 13 und mithin der Kollektorstrom des Transistors 13 als der des Transistors 14. Infolgedessen ist der Strom am Ausgang des Stromspielgels 19 größer als der Kollektorstrom des Transistors 14, und der an den Ausgang des Transistors 20 angeschlossene Transistorschalter ist gesperrt.

Bei schwach empfangenen Sendern ergeben sich relativ große Rauschsignale im Bereich oberhalb der Nutzfrequenz. Wenn die Amplituden dieser Rauschkomponenten mit der Frequenz f einen Schwellwert U überschreiten, für den die Beziehung gilt

$$U = 0{,}5\ IR(1 + (f_g/f)^2)^{1/2}$$

wobei I der von der Quelle 12 gelieferte Gleichstrom, R der Wert des Widerstandes 15 und $f_g$ die 3-dB-Grenzfrequenz des Tiefpasses 17,18 ist, dann kann der vom Transistor 14 gelieferte Strom kurzzeitig größer werden als der Strom des Transistors 13. In diesem Fall sind nämlich die Rauschkomponenten an der Basis des Transistors 13 größer als der Gleichspannungsabfall am Widerstand 15, so daß die positiven Rauschspannungsspitzen die Basis-Emitter-Spannung des Transistors 13 kurzzeitig kleiner machen können als die Basis-Emitter-Spannung des Transistors 14. Während dieser Spitzen überwiegt der Kollektorstrom des Transistors 14 daher den Ausgangsstrom des Stromspiegels 19, und der Schalttransistor 20 schaltet durch. In bezug auf den Transistor 20 wirkt die Schaltung 12 ..19 also wie ein Hochpaß mit nachgeschaltetem Gleichrichter.

Wenn der Transistor 20 durchschaltet, entlädt sich der Kondensator 7 über die Reihenschaltung des Begrenzungswiderstandes 21 und des Transistors 20, wobei der Entladestrom wesentlich größer ist als der Strom, den die Multiplizierstufe 6 zur Aufladung des Kondensators liefern kann.

Die Steuerschaltung 11 arbeitet mit den Stufen 6 bis 8 des Stereodekoders folgendermaßen zusammen:

Bei starken Monosignalen enthält das Signal am Eingang 1 allenfalls sehr kleine Komponenten im Frequenzbereich des Pilotsignals. Infolgedessen ist die Spannung am Kondensator 7 nur klein, und der Schmitt-Trigger 8 befindet sich in seinem Schaltzustand für den Monobetrieb, wodurch der Schalttransistor 22 gesperrt wird. Die Schaltung 11 ist dann zwar wirksam, jedoch ist das höherfrequente Rauschen so schwach, daß der Kollektorstrom des Transistors 13 stets größer ist als der des Transistors 14. Der Transistorschalter 20 ist also gesperrt, und die Spannung am Kondensator 7 hängt ausschließlich von den Eingangssignalen der Multiplizierstufe 6 ab.

Wenn die Empfangsfeldstärke eines Monosignale ausstrahlenden Senders schwächer wird, werden die Rauschkomponenten sowohl im Frequenzbereich des Pilotsignals als auch oberhalb des Nutzfrequenzbereichs größer. Das Anwachsen der Rauschkomponenten im Frequenzbereich des Pilotsignals hat zur Folge, daß das von der Multiplizierstufe 6 gelieferte Signal schwankt, wobei die Schwankungen so groß werden können, daß - gäbe es die Steuerschaltung 11 nicht - die Spannung am Kondensator 7 kurzzeitig den Schmitt-Trigger 8 umschalten könnte. Dadurch, daß die Spitzen der höherfrequenten Rauschkomponenten aber in diesem Empfangszustand den Schalter 20 durchschalten, wird der Kondensator 7 entladen, so daß eine solche Umschaltung unterbunden wird.

Beim Empfang eines starken Stereosenders enthält das Multiplex-Signal am Eingang 1 kontinuierlich eine relativ starke Pilotsignalkomponente, auf der die PLL-Schaltung 2..5 einrastet, so daß der Kondensator 7 auf eine Spannung aufgeladen wird, die den Schwellwert des Schmitt-Triggers 8 überschreitet, so daß dieser in den mit dem Stereobetrieb verbundenen Schaltzustand übergeht. Dadurch wird der Transistor 22 leitend und die Schaltung 11 unwirksam. - Beim Empfang von Stereosendern mit geringer Feldstärke nimmt die Pilotsignalamplitude ab und das Rauschen zu. Das Ausgangssignal der Multiplizierstufe 6 schwankt dabei beträchtlich und kann dabei kurzzeitig so klein werden, daß der Schmitt-Trigger 8 umschaltet. Dadurch wird der Transistor 22 gesperrt und die Steuerschaltung 11 wirksam. Die höherfrequenten Rauschkomponenten bewirken dann ein Durchschalten des Transistors 20, wodurch der Kondensator 7 soweit entladen wird, daß der Schmitt-Trigger bei dieser Feldstärke bzw. bei noch niedrigen Feldstärken ständig in dem Schaltzustand für Monobetrieb bleibt. Wenn die Empfangsfeldstärke danach wieder soweit steigt - und die Rauschkomponenten dementsprechend wieder soweit abnehmen, daß der Transistor 20 praktisch nicht mehr durchgeschaltet wird, kann sich der Kondensator 7 wieder auf einen Wert aufladen, bei dem der Schmitt-Trigger auf Stereo umschaltet. Diese Feldstärke ist aber größer als diejenige, bei der er zwangsweise vom Stereobetrieb in den Monobetrieb übergeht. Auch die Schaltung 11 zeigt daher einen Hystereseeffekt.

Der Pilotsignaldetektor kann auch durch eine andere Schaltung ersetzt werden, die auf im Eingangssignal enthaltene Komponenten mit der Frequenz des Pilotsignals anspricht und ein von deren Amplitude abhängiges Ausgangssignal erzeugt. Wesentlich ist nur, daß die Steuerschaltung dieses Ausgangssignal bzw. das Eingangssignal des Schmitt-Triggers so beeinflußt, daß bei starkem Rauschen der Schmitt-Trigger in dem mit dem Monoempfang verbundenen Betriebszustand bleibt.

**Patentansprüche**

1. Stereo-Empfangsschaltung zum Verarbeiten eines ein Pilotsignal enthaltenden Multiplex-Signals, mit einem Pilotsignaldetektor (6,7), der im Multiplex-Signal enthaltene Frequenzkomponenten mit der Frequenz des Pilotsignals detektiert und einen Schmitt-Trigger (8) zum Beeinflussen des Mono/Stereobetriebes steuert, sowie mit einer die Rauschkomponenten im Multiplex-Signal erfassenden, auf den Schmitt-Trigger (8) einwirkenden Steuerschaltung (11),
dadurch gekennzeichnet, daß die Steuerschaltung (11) nur im Monobetrieb wirksam ist und beim Empfang von ausreichend starken Rauschkomponenten das Eingangssignal des Schmitt-Triggers (8) so beeinflußt, daß dieser in seinem mit dem Monobetrieb verbundenen Schaltzustand bleibt.

2. Schaltung nach Anspruch 1,
dadurch gekennzeichnet, daß die Steuerschaltung (11) eine Hochpaßschaltung enthält, die die Nutzfrequenzen im Multiplex-Signal im wesentlichen unterdrückt.

3. Schaltung nach Anspruch 2,
dadurch gekennzeichnet, daß die Hochpaßschaltung durch einen Differenzverstärker (13..15) gebildet wird, dessen einem Eingang das Multiplex-Signal ungefiltert und dessen anderem Eingang das Multiplex-Signal über einen Tiefpaß (17,18) zugeführt wird.

4. Schaltung nach Anspruch 3,
dadurch gekennzeichnet, daß der Differenzverstärker zwei Transistoren (13,14) enthält, deren Basen das Ausgangssignal des Tiefpasses (17,18) bzw. das ungefilterte Multiplex-Signal zugeführt wird und deren Emitterstrom von einer Stromquelle (12) geliefert wird, die mit dem Emitter des mit dem Tiefpaß (17,18) verbundenen Transistors (14) über einen Widerstand (15) und mit dem Emitter des anderen Transistors (13) direkt verbunden ist.

5. Schaltung nach Anspruch 4,
dadurch gekennzeichnet, daß die Kollektoren der Transistoren (13,14) mit dem Eingang bzw. dem Ausgang eines Stromspiegels (19) verbunden sind, dessen Ausgang zusätzlich mit einem Transistorschalter (20) gekoppelt ist, dessen Ausgang ein Kondensator (7) parallelgeschaltet ist, an dem das Ausgangssignal des Pilot-Signaldetektors anliegt.

6. Schaltung nach einem der Ansprüche 3 bis 5,
dadurch gekennzeichnet, daß dem Differenzverstärker (13..15) von der Stromquelle (12) ein Gleichstrom geliefert wird, der über einen von dem Schmitt-Trigger (8) gesteuerten Transistorschalter (22) ableitbar ist.

**Claims**

1. A stereo receiver circuit for processing a multiplex signal comprising a pilot signal, including a pilot signal detector (6, 7) which detects frequency components in the multiplex signal at the frequency of the pilot signal and which controls a Schmitt trigger (8) for influencing the mono/stereo operation, said circuit also including a control circuit (11) capturing the noise components in the multiplex signal and acting on the Schmitt trigger, characterized in that the control circuit (11) is only active in mono operation and influences the input signal of the Schmitt trigger (8) in the case of reception of sufficiently strong noise components to such a extent that said Schmitt trigger remains in its switching state for mono operation.

2. A circuit as claimed in Claim 1, characterized in that the control circuit (11) comprises a high-pass filter circuit which substantially suppresses the useful frequencies in the multiplex signal.

3. A circuit as claimed in Claim 2, characterized in that the high-pass filter circuit is constituted by a differential amplifier (13 ... 15), one input of which receives the multiplex signal in an unfiltered form and the other input of which receives the multiplex signal *via* a low-pass filter (17, 18).

4. A circuit as claimed in Claim 3, characterized in that the differential amplifier comprises two transistors (13, 14) whose bases receive the output signal of the low-pass filter (17, 18) and the unfiltered multiplex signal and whose emitter current is supplied by current source (12) which is connected *via* a resistor (15) to the emitter of the transistor (14) connected to the low-pass filter (17, 18) and is directly connected to the emitter of the other transistor (13).

5. A circuit as claimed in Claim 4, characterized in that the collectors of the transistors (13, 14) are connected to the input and the output, respectively, of a current mirror (19) whose output is also coupled to a transistor switch (20) whose output is arranged in parallel with a capacitor (7) at which the output signal of the pilot signal detector is present.

6. A circuit as claimed in any one of Claims 3 to 5, characterized in that the current source (12) supplies a direct current to the differential amplifier (13 ... 15), which direct current can be shunted *via* a transistor switch (22) controlled by the Schmitt trigger (8).

**Revendications**

1. Circuit de réception stéréo pour traiter un signal multiplex contenant un signal pilote, ledit circuit comprenant un détecteur de signal pilote (6, 7), qui détecte des composantes de fréquence contenues dans le signal multiplex avec la fréquence du signal pilote et commande une bascule de Schmitt (8) pour influencer le mode de fonctionnement mono/stéréo, ainsi qu'un circuit de commande (11) captant les composantes de bruit dans le signal multiplex et agissant sur la bascule de Schmitt (8), caractérisé en ce que le circuit de commande (11) n'opère qu'en mode de fonctionnement mono et, à la réception de composantes de bruit suffisamment fortes, le signal d'entrée de la bascule de Schmitt (8) est influencé de telle façon que celles-ci reste dans son état de commutation correspondant au mode de fonctionnement mono.

2. Circuit selon la revendication 1, caractérisé en ce que le circuit de commande (11) contient un circuit passe-haut, qui supprime en substance les fréquences utiles dans le signal multiplex.

3. Circuit selon la revendication 2, caractérisé en ce que le circuit passe-haut est formé par un amplificateur différentiel (13..15) à une entrée duquel le signal multiplex est non filtré et à l'autre entrée duquel le signal multiplex est acheminé via un filtre passe-bas (17, 18).

4. Circuit selon la revendication 3, caractérisé en ce que l'amplificateur différentiel contient deux transistors (13, 14) aux bases desquels le signal de sortie du filtre passe-bas (17, 18) ou le signal multiplex non filtré est acheminé et dont le courant d'émetteur est délivré par une source de courant (12), qui est connecté à l'émetteur du transistor (14) relié au filtre passe-bas (17, 18), via une résistance (15), et directement à l'émetteur de l'autre transistor (13).

5. Circuit selon la revendication 4, caractérisé en ce que les collecteurs des transistors (13, 14) sont connectés à l'entrée ou à la sortie d'un miroir de courant (19) dont la sortie est, en outre, couplée à un commutateur à transistor (20), à la sortie duquel est connecté en parallèle un condensateur (7) auquel le signal de sortie du détecteur de signal pilote est appliqué.

6. Circuit selon l'une quelconque des revendications 3 à 5, caractérisé en ce qu'à l'amplificateur différentiel (13..15) est délivré, par la source de courant (12), un courant continu qui peut être dérivé via un commutateur à transistor (22) commandé par une bascule de Schmitt (8).